# EUROPEAN PATENT APPLICATION

(11) **EP 4 749 805 A1**
(43) Date of publication of application: **27.05.2026**
(21) Application number: 25217944.5
(22) Date of filing: 24.11.2025
(51) Int. Cl.: H01M 50/505, H01R 4/70

(54) **MODULE TO MODULE BUSBAR COVER ASSEMBLY**

(30) Priority: 26.11.2024 US 202463725058 P; 17.11.2025 US 202519390777
(71) Applicant: Aptiv Technologies AG, 8200 Schaffhausen (CH)
(72) Inventor: HAMILTON, James, 8200 Schaffhausen (CH); GUTHRIE, William, 8200 Schaffhausen (CH); BOHAN, Andrew, 8200 Schaffhausen (CH); DURSE, Nicholas A., 8200 Schaffhausen (CH); WEIDNER, Jonathan D., 8200 Schaffhausen (CH); HANDO, Nathan, 8200 Schaffhausen (CH)
(74) Representative: Bardehle Pagenberg Partnerschaft mbB Patentanwälte Rechtsanwälte

(57) **Abstract**

A conductor cover includes a first cover member and a second cover member. The first cover member includes a first aperture and a first passage. The first aperture is configured to receive a first fastener. The first passage is configured to receive a busbar. The second cover member includes a second aperture and a second passage. The second aperture is configured to receive a second fastener. The second passage is configured to receive the busbar and translatably-receive the first cover member to electrically insulate the busbar in cooperation with the first cover member.

## Description

### CROSS-REFERENCE TO RELATED APPLICATIONS

This application claims the benefit of U.S. Provisional Application No. 63/725,058 filed November 26, 2024, the entire disclosure of which is incorporated herein by reference.

### FIELD

The present disclosure relates to a module to module busbar cover assembly and more particularly to a busbar cover assembly including a two-piece cover.

### BACKGROUND

In electric vehicle battery packs, battery cell modules are connected together, for example, with busbars. Thermal expansion inside of the battery pack can affect the busbars. In some instances, thermal expansion can make it difficult to maintain tolerances (e.g., dimensional tolerances) when installing parts (e.g., battery packs) within the vehicle, which can, in turn, impact the amount of time and labor needed to complete the assembly process.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

One aspect of the present disclosure provides a conductor cover. The conductor cover includes a first cover member and a second cover member. The first cover member includes a first aperture and a first passage. The first aperture is configured to receive a first fastener. The first passage is configured to receive a busbar. The second cover member includes a second aperture and a second passage. The second aperture is configured to receive a second fastener. The second passage is configured to receive the busbar and translatably-receive the first cover member to electrically insulate the busbar in cooperation with the first cover member.

Further areas of applicability of the present disclosure will become apparent from the detailed description, the claims, and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings.
FIG. 1 is a perspective view of a module to module busbar assembly in accordance with the principles of the present disclosure.
FIG. 2 is an exploded view of the module to module busbar assembly of FIG. 1.
FIG. 3 is a cross-sectional view of the module to module busbar assembly of FIG. 1 taken through the line 3-3.

In the drawings, reference numbers may be reused to identify similar and/or identical elements.

### DETAILED DESCRIPTION

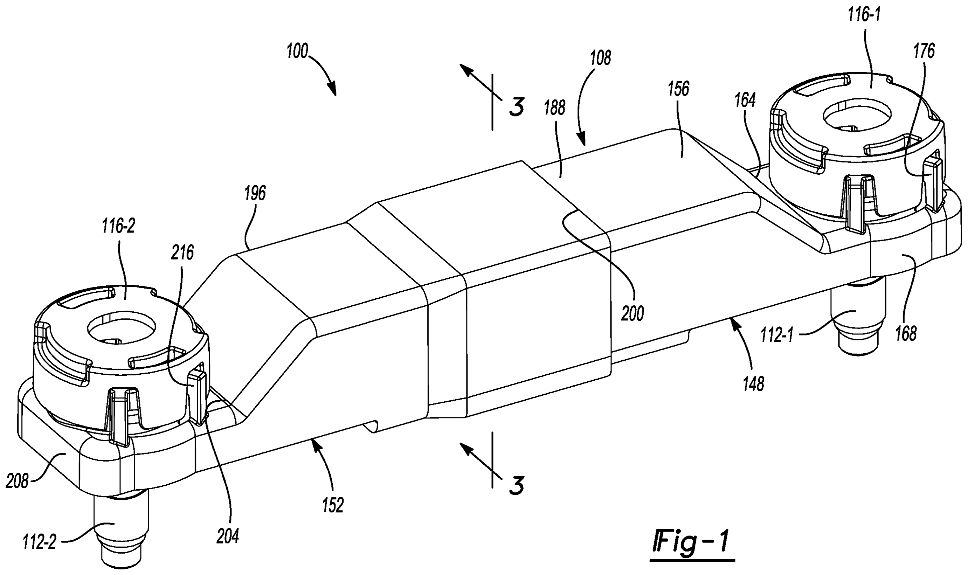

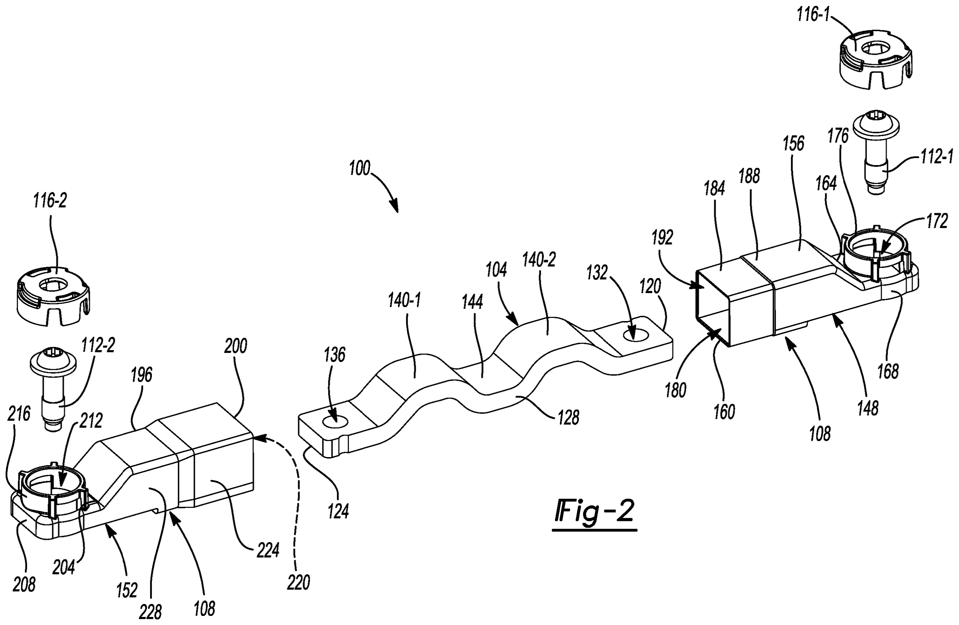

FIGS. 1-3 illustrate a busbar assembly 100. In various implementations, the busbar assembly 100 is a module to module busbar assembly. As will be discussed in more detail below, the busbar assembly 100 may connect (e.g., electrically connect) two or more power sources (e.g., batteries, such as battery packs for electric vehicles, not shown), while allowing for thermal expansion between the power sources.

The busbar assembly 100 may include a conductor 104 and a conductor cover assembly 108. While the conductor 104 is generally shown and described herein as being a busbar (e.g., busbar 104), it will be appreciated that the conductor 104 may include other forms (e.g., a metal wire, rod, plate, etc.) within the scope of the present disclosure.

The conductor cover assembly 108 may be coupled to the conductor 104. In various implementations, the conductor cover assembly 108 surrounds the conductor 104. In various implementations, the conductor cover assembly 108 electrically insulates the conductor 104. In various implementations, the conductor cover assembly 108 is or includes an electrical insulator. As will be explained in more detail below, in various implementations, the conductor cover assembly 108 allows the conductor 104 to flex during an installation process and/or after the installation process during the life cycle of the busbar assembly 100. In various implementations, the conductor cover assembly 108 provides dielectric and finger-safe insulation to the busbar assembly 100. In various implementations, the conductor cover assembly 108 is injection molded. In various implementations, the conductor cover assembly 108 is made of plastic.

In various implementations, the busbar assembly 100 includes a set of fasteners 112. For example, the set of fasteners 112 may include a first fastener 112-1 and a second fastener 112-2. As will be discussed in more detail below, the set of fasteners 112 may secure the conductor cover assembly 108 to the conductor 104 and/or secure the busbar assembly 100 to one or power sources (not shown). In various implementations, the first fastener 112-1 and/or the second fastener 112-2 are disposed in one or more apertures formed in the conductor cover assembly 108 and/or the conductor 104. In various implementations, the set of fasteners 112 includes at least one of: a screw, a bolt, or a rivet.

In various implementations, the busbar assembly 100 includes a set of caps 116. For example, the set of caps 116 may include a first cap 116-1 and a second cap 116-2. Each of the set of caps 116 may engage the conductor cover assembly 108 and/or one of the set of fasteners 112. In various implementations, the first cap 116-1 engages the first fastener 112-1 and the second cap 116-2 engages the second fastener 112-2. In various implementations, Each of the set of caps 116 at least partially surrounds (e.g., covers) a corresponding fastener of the set of fasteners 112. In various implementations, each of the set of caps 116 is or includes an electrical insulator. In various implementations, the set of caps 116 provide dielectric and finger-safe insulation to the busbar assembly 100. In various implementations, each of the set of caps 116 is injection molded. In various implementations, each of the set of caps 116 is made of plastic.

The conductor 104 includes a first end 120 (e.g., proximal end), a second end 124 (e.g., distal end), and a main body portion 128 extending between the first end 120 and the second end 124. In various implementations, the conductor 104 includes a first aperture 132 proximate the first end 120 and a second aperture 136 proximate the second end 124. Each of the first aperture 132 and the second aperture 136 extend through the main body portion 128. In an assembled configuration (FIG. 1), the first aperture 132 may receive the first fastener 112-1 and the second aperture 136 may receive the second fastener 112-2.

In various implementations, the main body portion 128 includes one or more ridges 140, such as a first ridge 140-1 and a second ridge 140-2. The one or more ridges 140 may form one or more valleys 144 therebetween. The one or more ridges 140 and one or more valleys 144 may allow the conductor 104 to flex during an installation process and/or after the installation process during the life cycle of the busbar assembly 100. The one or more ridges 140 and one or more valleys 144 may allow for thermal expansion of the conductor 104 as well as accommodate for tolerances in installation. In various implementations, the conductor 104 is or includes a conductor, such as a flexible laminated conductor. In various implementations, the conductor 104 is made of a metal material.

The conductor cover assembly 108 may include a first cover member 148 and a second cover member 152. In the assembled configuration (FIG. 1), the first cover member 148 may be coupled to the first end 120 of the conductor 104 (e.g., by the first fastener 112-1) and the second cover member 152 may be coupled to the second end 124 of the conductor 104 (e.g., by the second fastener 112-2).

In the assembled configuration (FIG. 1), the first cover member 148 and the second cover member 152 collectively surround the conductor 104. In the assembled configuration (FIG. 1), one of the first cover member 148 or the second cover member 152 is at least partially disposed in the other of the first cover member 148 or the second cover member 152. In various implementations, one of the first cover member 148 or the second cover member 152 may translatably-receive the other of the first cover member 148 or the second cover member 152.

In various implementations, the first cover member 148 and the second cover member 152 electrically insulate the conductor 104 in cooperation with one another. In various implementations, the first cover member 148 and the second cover member 152 allow the conductor 104 to flex without separating from one another while electrically insulating the conductor 104.

In various implementations, the first cover member 148 and the second cover member 152 are injection-molded. In various implementations, the first cover member 148 and the second cover member 152 are or include electrical insulators.

The first cover member 148 may include a first body portion 156 extending between a first end 160 (e.g., proximal end) and a second end 164 (e.g., distal end) that is opposite the first end 160 and a first connection portion 168 extending from the second end 164. In various implementations, the first connection portion 168 defines a third aperture 172. An opening 174 formed in a bottom portion of the first body portion 156 may be in fluid communication with the third aperture 172. In the assembled configuration (FIG. 1), the first connection portion 168 may be coupled to the first end 120 of the conductor 104. In the assembled configuration (FIG. 1), the third aperture 172 may receive the first fastener 112-1 to secure the first cover member 148 to the conductor 104. In various implementations, in the assembled configuration (FIG. 1), the third aperture 172 is aligned with the first aperture 132, such that the first fastener 112-1 extends through the first aperture 132 and the third aperture 172. In various implementations, the first connection portion 168 includes a first cap receiving structure 176. The first cap receiving structure 176 may surround the third aperture 172 and receive the first cap 116-1 in the assembled configuration (FIG. 1).

The first body portion 156 may define a first passage 180. In the assembled configuration (FIG. 1), the first passage 180 may receive at least a portion of the conductor 104 (e.g., the first end 120 and/or a portion of the main body portion 128). In various implementations, the first passage 180 has a square-shaped cross-section (e.g., cross-sectional area). In various implementations, the first body portion 156 includes a proximal portion 184 proximate the first end 160 and a distal portion 188 proximate the second end 164. The proximal portion 184 and the distal portion 188 may collectively define the first passage 180. In various implementations, a first opening 192 to the first passage 180 is formed in the first end 160.

In various implementations, the proximal portion 184 defines a first width W1 and the distal portion 188 defines a second width W2 such that the proximal and distal portions 184, 188 form a stop surface therebetween. In various implementations, the second width W2 is greater than the first width W1. In various implementations, the width of the first cover member 148 increases in a direction extending from the first end 160 to the second end 164.

The second cover member 152 may include a second body portion 196 extending between a first end 200 (e.g., proximal end) and a second end 204 (e.g., distal end) that is opposite the first end 200 and a second connection portion 208 extending from the second end 204. In various implementations, the second connection portion 208 defines a fourth aperture 212. An opening 214 formed in a bottom portion of the second body portion 196 may be in fluid communication with the fourth aperture 212. In the assembled configuration (FIG. 1), the second connection portion 208 may be coupled to the second end 124 of the conductor 104. In the assembled configuration (FIG. 1), the fourth aperture 212 may receive the second fastener 112-2 to secure the second cover member 152 to the conductor 104. In various implementations, in the assembled configuration (FIG. 1), the fourth aperture 212 is aligned with the second aperture 136, such that the second fastener 112-2 extends through the second aperture 136 and the fourth aperture 212. In various implementations, the second connection portion 208 includes a second cap receiving structure 216. The second cap receiving structure 216 may surround the fourth aperture 212 and receive the second cap 116-2 in the assembled configuration (FIG. 1).

The second body portion 196 may define a second passage 220. In the assembled configuration (FIG. 1), the second passage 220 may receive at least a portion of the conductor 104 (e.g., the second end 124 and/or a portion of the main body portion 128). In the assembled configuration (FIG. 1), the second passage 220 may also receive the first cover member 148 (e.g., the proximal portion 184 of the first body portion 156).

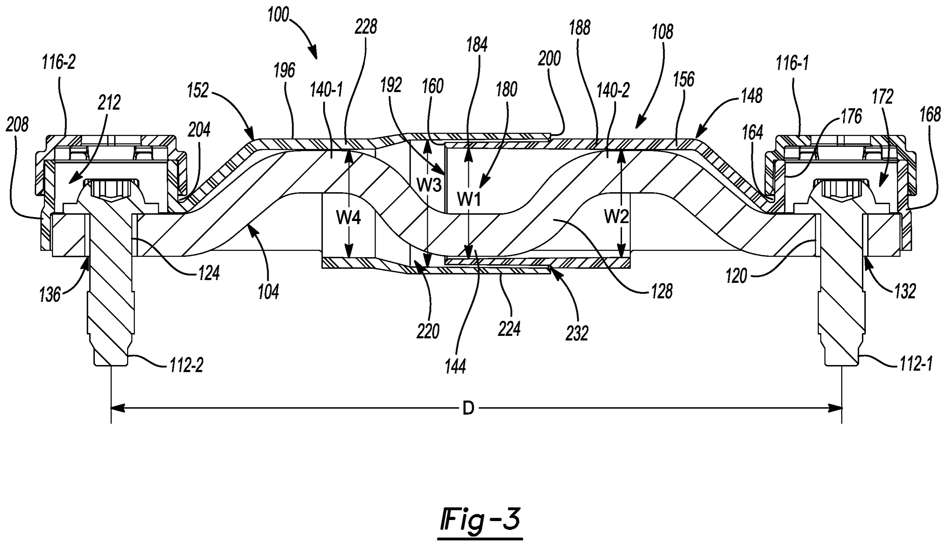

The first cover member 148 and the second cover member 152 may be translatable relative to one another and the second passage 220 may translatably-receive the first cover member 148. Because the first cover member 148 and the second cover member 152 are translatable relative to one another and the first cover member 148 is at least partially disposed in the second passage 220, as the busbar expands (or contracts), the first cover member 148 may translate relative to the second cover member 152 but remain at least partially disposed within the second passage 220, thereby maintaining the electrical insulation of the conductor 104 as the busbar expands (or contracts). For example, the first cover member 148 may translate relative to the second cover member 152 within the second passage 220 as a distance D (FIG. 3) between the first fastener 112-1 and the second fastener 112-2 increases or decreases, to allow the conductor cover assembly 108 to completely cover the conductor 104 at various distances D during thermal expansion of the conductor 104.

In various implementations, the second passage 220 has a square-shaped cross-section (e.g., cross-sectional area) that is larger than the cross-section (e.g., cross-sectional area) of the first passage 180.

In various implementations, the second body portion 196 includes a proximal portion 224 proximate the first end 200 and a distal portion 228 proximate the second end 204. The proximal portion 224 and the distal portion 228 may collectively define the second passage 220. In various implementations, a second opening 232 to the second passage 220 is formed in the first end 200.

In various implementations, the second passage 220 defines a third width W3 at the proximal portion 224, and a fourth width W4 at the distal portion 228. In various implementations, the third width W3 is greater than the fourth width W4. In various implementations, the width of the second passage 220 decreases in a direction extending from the first end 200 to the second end 204. In various implementations, the third width W3 is greater than the first width W1 of the proximal portion 184 of the first cover member 148. In various implementations, the fourth width W4 is less than the first width W1 of the proximal portion 184 of the first cover member 148. In various implementations, the third width W3 is smaller than the second width W2 of the distal portion 188 of the first cover member 148. Accordingly, the stop surface and/or the fourth width W4 may define a minimum for the distance D between the fasteners 112-1, 112-2.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Unless indicated otherwise, numbering or other labeling of instructions or method steps is done for convenient reference, not to indicate a fixed order.

Numerical terms, such as "first," "second," and "third," may be used in the disclosure and claims as unique labels: they are not used to imply a sequence or order unless the context clearly indicates otherwise. In other words, a "second" element could be relabeled as a "first" element without departing from the principles of the present disclosure. Further, the presence of a "second" element does not imply or require the presence of a "first" element. Similarly, the presence of a "first" element does not imply or require the presence of a "second" element.

Unless the context clearly indicates otherwise, the singular articles "a," "an," and "the" before a noun do not restrict the noun to a single instance. The verbs "comprise," "include," and "have" are inclusive and therefore specify the presence of elements without excluding the presence of one or more additional elements.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements are described using various terms, including "connected," "coupled," "engaged," "adjacent," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements.

The term "set" generally means a grouping of one or more elements. The elements of a set do not necessarily need to have any characteristics in common or otherwise belong together. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. In various implementations, a subset of the first set is not necessarily a proper subset: in certain circumstances, the subset may be coextensive with (equal to) the first set (in other words, the subset may include the same elements as the first set). In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR. The phrase "A, B, and/or C" should be construed in the same way as the phrase "at least one of A, B, and C".

The examples of the present disclosure may include one or more components such as connectors, terminals, conductors, insulating members, shielding structures, housings, retention features, and sealing elements, among others, as well as corresponding systems and assemblies. These examples may be configured to facilitate electrical signal transmission, power delivery, electromagnetic compatibility, or mechanical retention under various environmental conditions, such as thermal cycling, vibration, or exposure to fluids. Disclosed components, systems and assemblies, among others, may be arranged modularly or integrally to accommodate various system architectures and routing constraints.

Disclosed components may be fabricated from thermoplastics, thermoset resins, composites, or metals, optionally treated or coated for corrosion resistance, electromagnetic interference shielding, or biocompatibility for use in various applications, system, and environments, among others. In particular, in medical applications, sterilizable and/or biocompatible materials may be used. In solar or renewable energy systems, UV-resistant and/or weatherproof materials may be incorporated. In aerospace and space-based systems, weight reduction may be prioritized, and high-performance materials such as polyimide films, fluoropolymers, or ceramic composites may be employed.

Disclosed components, systems and assemblies, among others, may be designed for automated assembly, including robotic insertion, ultrasonic welding, or crimping techniques. Adaptations may be made to ensure compliance with relevant standards, including International Organization for Standardization, Military Specification, Society of Automotive Engineers, Food and Drug Administration, or International Electrotechnical Commission, depending on the target industry or market. In this regard, while examples and embodiments of the present disclosure may be illustrated and described herein in the context of an automobile, it will be appreciated that such examples and embodiments are equally suited for other applications, systems, environments, industries, and markets, among others. For example, implementations of the present disclosure that relate generally to electrical components and assemblies, and more particularly to connectors, terminals, wiring harnesses, and integrated electrical interconnection systems, among others, are suitable for a wide range of environments and applications.

While exemplary embodiments described herein may reference automotive use cases, the disclosed technology is not limited thereto and may be employed in any system requiring, for example, robust, secure, reliable, and/or durable electrical connectivity, among others. In particular, the structures, materials, and configurations disclosed may be adapted for use in aerospace systems, medical devices, consumer electronics, industrial automation, energy distribution networks, solar and other renewable energy installations, marine vessels, and space exploration platforms. Accordingly, although specific embodiments may describe automotive implementations, the principles disclosed herein are equally applicable to any system requiring robust electrical interconnection, and claims directed to any system, application, and/or environmental domain are, and will be, contemplated by one of skill in the art.

Various example embodiments of the invention are described in the following clauses.

Clause 1: A conductor cover comprising: a first cover member including a first aperture configured to receive a first fastener, and a first passage configured to receive a busbar; and a second cover member including a second aperture configured to receive a second fastener, and a second passage configured to receive the busbar and translatably-receive the first cover member to electrically insulate the busbar in cooperation with the first cover member.

Clause 2: The conductor cover of clause 1 wherein at least a portion of the first cover member is disposed within the second passage.

Clause 3: The conductor cover of any of clauses 1-2 wherein the first cover member and the second cover member are configured to allow the busbar to flex without separating from one another while electrically insulating the busbar in cooperation with the first cover member.

Clause 4: The conductor cover of any of clauses 1-3 wherein the first cover member and the second cover member collectively surround the busbar.

Clause 5: The conductor cover of any of clauses 1-4 wherein the first cover member is configured to be coupled to a proximal end of the busbar.

Clause 6: The conductor cover of clause 5 wherein the second cover member is configured to be coupled to a distal end of the busbar that is opposite the proximal end of the busbar.

Clause 7: The conductor cover of any of clauses 1-6 wherein the first cover member includes: a first body portion extending between a first end and a second end, and a first connection portion extending from the second end.

Clause 8: The conductor cover of clause 7 wherein: an opening of the first passage is formed in the first end, and the first aperture is formed in the first connection portion.

Clause 9: The conductor cover of any of clauses 1-8 wherein the second cover member includes: a second body portion extending between a third end and a fourth end, and a second connection portion extending from the fourth end.

Clause 10: The conductor cover of clause 9 wherein: an opening of the second passage is formed in the third end, and the second aperture is formed in the second connection portion.

Clause 11: The conductor cover of any of clauses 1-10 wherein the first passage has a square-shaped cross-section.

Clause 12: The conductor cover of clause 11 wherein the second passage has a square-shaped cross-section.

Clause 13: The conductor cover of any of clauses 1-12 wherein the first passage has a first cross-sectional area, and the second passage has a second cross-sectional area that is larger than the first cross-sectional area.

Clause 14: The conductor cover of any of clauses 1-13 wherein: the first cover member includes a proximal end defining a first width; and the second passage includes: a proximal portion configured to receive the proximal end and defining a second width that is greater than the first width, and a distal portion defining a third width that is less than the first width.

Clause 15: The conductor cover of clause 14 wherein the first cover member includes a distal end defining a fourth width that is greater than the second width.

Clause 16: A busbar assembly comprising: the conductor cover of any of clauses 1-15; and the busbar, wherein the busbar is disposed within the first passage and the second passage.

Clause 17: The busbar assembly of clause 16 further comprising the first fastener and the second fastener.

Clause 18: The busbar assembly of clause 17 wherein the busbar includes: a third aperture proximate a proximal end of the busbar and configured to receive the first fastener, and a fourth aperture proximate a distal end of the busbar that is opposite the proximal end and configured to receive the second fastener.

Clause 19: The busbar assembly of any of clauses 16-18 further comprising: a first cap configured to engage the first fastener and the first cover member, and a second cap configured to engage the second fastener and the second cover member.

Clause 20: The busbar assembly of any of clauses 16-19 wherein the busbar includes a flexible laminated conductor.

## Claims

1. A conductor cover comprising:
a first cover member (148) including a first aperture (132) configured to receive a first fastener, and a first passage (180) configured to receive a busbar (104); and
a second cover member (152) including a second aperture (136) configured to receive a second fastener, and a second passage (220) configured to receive the busbar (104) and translatably-receive the first cover member (148) to electrically insulate the busbar (104) in cooperation with the first cover member (148).

2. The conductor cover of claim 1 wherein at least a portion (128, 184, 188) of the first cover member (148) is disposed within the second passage (220).

3. The conductor cover of claim 1 or 2 wherein the first cover member (148) and the second cover member (152) are configured to allow the busbar (104) to flex without separating from one another while electrically insulating the busbar (104) in cooperation with the first cover member (148).

4. The conductor cover of any one of the preceding claims wherein the first cover member (148) and the second cover member (152) collectively surround the busbar (104).

5. The conductor cover of any one of the preceding claims wherein the first cover member (148) is configured to be coupled to a proximal end of the busbar (104), wherein preferably the second cover member (152) is configured to be coupled to a distal end of the busbar (104) that is opposite the proximal end of the busbar (104).

6. The conductor cover of any one of the preceding claims wherein the first cover member (148) includes:
a first body portion (156) extending between a first end (120, 160, 200) and a second end (124, 164, 204), and
a first connection portion (168) extending from the second end (124, 164, 204), wherein preferably:
an opening (174, 192, 214, 232) of the first passage (180) is formed in the first end (120, 160, 200), and
the first aperture (132) is formed in the first connection portion (168).

7. The conductor cover of claim 6 wherein the second cover member (152) includes:
a second body portion (196) extending between a third end and a fourth end, and
a second connection portion (208) extending from the fourth end.

8. The conductor cover of claim 7 wherein:
an opening (174, 192, 214, 232) of the second passage (220) is formed in the third end, and
the second aperture (136) is formed in the second connection portion (208).

9. The conductor cover of any one of the preceding claims wherein the first passage (180) has a square-shaped cross-section, wherein preferably the second passage (220) has a square-shaped cross-section.

10. The conductor cover of any one of the preceding claims wherein the first passage (180) has a first cross-sectional area, and the second passage (220) has a second cross-sectional area that is larger than the first cross-sectional area.

11. The conductor cover of any one of the preceding claims wherein:
the first cover member (148) includes a proximal end defining a first width; and
the second passage (220) includes:
a proximal portion configured to receive the proximal end and defining a second width that is greater than the first width, and
a distal portion defining a third width that is less than the first width,
wherein preferably the first cover member (148) includes a distal end defining a fourth width that is greater than the second width.

12. A busbar assembly (100) comprising:
the conductor cover of any one of the preceding claims; and
the busbar (104), wherein the busbar (104) is disposed within the first passage (180) and the second passage (220).

13. The busbar assembly (100) of claim 12 further comprising the first fastener and the second fastener, wherein the busbar (104) preferably includes:
a third aperture proximate a proximal end of the busbar (104) and configured to receive the first fastener, and
a fourth aperture proximate a distal end of the busbar (104) that is opposite the proximal end and configured to receive the second fastener.

14. The busbar assembly (100) of any one of claims 12 to 13 further comprising:
a first cap configured to engage the first fastener and the first cover member (148), and
a second cap configured to engage the second fastener and the second cover member (152).

15. The busbar assembly (100) of any one of claims 12 to 14 wherein the busbar (104) includes a flexible laminated conductor.
